# EUROPÄISCHE PATENTSCHRIFT

(11) **EP 2 505 897 B1**
(45) Veröffentlichungstag und Bekanntmachung des Hinweises auf die Patenterteilung: **03.08.2016**
(21) Anmeldenummer: 12151388.1
(22) Anmeldetag: 17.01.2012
(51) Int. Cl.: F16L 33/207, F16L 13/14

(54) **Pressverbindung für Kunststoffrohre**
Crimp connection for plastic tubes
Raccord de sertissage pour tuyaux en plastique

(30) Priorität: 29.03.2011 DE 202011004544 U
(43) Veröffentlichungstag der Anmeldung: 03.10.2012
(73) Patentinhaber: IPA Produktions- und Vertriebsges.m.b.H., 3163 Rohrbach (AT)
(72) Erfinder: Ogris, Bernhard, 2511 Pfaffstätten (AT)
(74) Vertreter: Schwabe - Sandmair - Marx

(56) Entgegenhaltungen:
- EP-A2- 1 122 485
- DE-A1- 3 805 655
- DE-U1- 20 301 139
- DE-U1- 29 510 265
- DE-U1-202006 010 350
- JP-A- 2003 028 367
- US-B1- 6 450 549

## Beschreibung

Die Erfindung betrifft eine Pressverbindung für Kunststoffrohre und insbesondere für Metall-Verbundrohre mit einer Stützhülse zum Aufschieben eines Rohres und mit einer Presshülse zur Pressfixierung des Rohres auf der Stützhülse, wobei die Stützhülse mit einer O-Ringnut und mit mindestens einem Sägezahnprofil versehen ist, wobei sich sowohl die Nut als auch das Sägezahnprofil umfänglich erstrecken, während die Profilierung in Radialrichtung ausgebildet ist, nach dem Anspruch 1.

Aus der JP 2003 028 367 A ist eine Schlauchverbindung für relativ flexible Schläuche, nicht jedoch eine Pressverbindung, bekannt, d.h. Schläuche, die aus vergleichsweise weichen Materialien hergestellt sind. Auf die Rohrverbindung wird ein relativ weicher Schlauch aufgeschoben, dessen Material durch eine Außenhülse radial nach innen in die Zahnung der Stützhülse hineingelenkt wird. Eine Verpressung der Außenhülse findet nicht statt. Als zu überwindendes Problem wird in der Druckschrift offenbart, dass das Material des Schlauches im Laufe der Zeit schwindet. In Folge dieses Schwundes bildet sich zwischen der Stützhülse und dem Material des Schlauches im Bereich der Stützhülse ein Spalt C. Um trotz dieses sich im Laufe der Zeit ausbildenden Spaltes eine Dichteigenschaft auch nach längerer Zeit bereitstellen zu können, weist der einzige O-Ring S eine Höhe auf, derart, dass durch Ausdehnung des O-Ringes auch nach dem Materiälschwund des Materials des Schlauches der Spalt C geschlossen werden kann.

Bei Pressverbindungen insbesondere für Metall-Verbundrohre ist es üblich, zwei O-Ringe auf einer Stützhülse einer Pressverbindung vorzusehen und oberhalb jedes dieser O-Ringe, die in der Regel Gummiringe sind, eine darüber befindliche Presshülse vollumfänglich oder teilumfänglich zu verpressen, um somit die innere Kunststoffhaut eines Metall-Verbundrohres in eine dauerhaft dichtende Anlage an die O-Ringe zu verbringen. Um eine mechanische Fixierung des Rohres in der Pressverbindung zu schaffen, ist die Stützhülse in der Regel mit mehreren Sägezahnprofilen ausgebildet. Das Paar von Verpressungen in Verbindung mit den Sägezahnprofilen ermöglicht dann eine dichte und mechanisch stabile Verbindung.

Die Grundmaterialien für derlei Pressverbindungen werden nachhaltig teurer, so dass die Kosten für diese Pressverbindungen analog dazu steigen. Das zeigt, dass es prinzipiell wünschenswert wäre, bei gleichbleibender Qualität der Pressverbindung einen geringeren Materialaufwand investieren zu müssen, um eine zuverlässige Pressverbindung bereitstellen zu können.

Gemäß der vorliegenden Erfindung wird dies durch eine Pressverbindung mit dem im Anspruch 1 aufgeführten Merkmalen erreicht.

Die Vorteile, die gemäß der vorliegenden Erfindung zu erzielen sind, beruhen darauf, dass die Stützhülse lediglich mit einer einzigen O-Ringnut versehen wird, wobei eine ihrer radialen Flanken direkt in das radial ansteigende Profil des wenigstens einen Sägezahnprofils übergeht. Der Übergang erfolgt bei einer bevorzugt mehr als halben Tiefe des Sägezahnprofils, vorzugsweise bei voller Tiefe des Sägezahnprofils, beispielsweise verglichen mit anderen, weiteren Sägezahnprofilen, an der Stützhülse oder einer üblichen Sägezahnstruktur.

Bevorzugt geht das Sägezahnpröfil, das an die gegenüberliegende Flanke der O-Ringnut angrenzt, unmittelbar aus der Flanke der O-Ringnut hervor. Das heißt, die steile Flanke des angrenzenden Sägezahnprofils stimmt mit der Flanke der O-Ringnut überein. Dabei ist diese Flanke bevorzugt in Richtung der Aufschubrichtung des Rohres vor dem O-Ring innerhalb der O-Ringnut angeordnet.

Damit ergeben sich folgende Vorteile: Insbesondere, wenn der O-Ring einen Außendurchmesser hat, der kleiner dem Außendurchmesser der Stützhülse ist, wird ein scharfkantiges Rohr bzw. Metall-Mehrschichtverbundrohr, das auf die erfindungsgemäße Pressverbindung aufgeschoben wird, keinen Kontakt zu der Oberfläche des O-Ringes bekommen, so dass der O-Ring nicht verletzt und damit in seiner Dichtwirkung beeinträchtigt werden kann. Dies hat zur Folge, dass eine Kalibrierung der Stirnseite des aufzuschiebenden Rohres nicht erforderlich ist.

Ferner ist es möglich, mit nur einer umfänglichen bzw. teilumfänglichen Verpressung oberhalb des einen O-Ringes innerhalb der einen einzigen O-Ringnut zu arbeiten, wofür als Verpresswerkzeug eine Verpresszange mit einer Kontur namens TH-Kompakt besonders geeignet ist. Diese ermöglicht eine Verpressung von etwa 2 mm Breite oder mehr in Axialrichtung der Stützhülse bzw. der Pressverbindung. Durch die unmittelbar angrenzende Flanke eines Sägezahns kann durch die Verpressung Kunststoffmaterial an der Innenwand des Metall-Verbundrohres großflächig in Anlage an den O-Ring gebracht werden, so dass durch eine einzige Verpressung eine hinreichende Dichtigkeit bewerkstelligt werden kann. Zudem ist es möglich, dass die Sägezahnstruktur in Aufschubrichtung des Rohres vor der O-Ringnut besonders tief in die Kunststoffinnenschicht des Metall-Verbundrohres eingreift, um somit einen besonders innigen und mechanisch widerstandsfähigen Kontakt zwischen dem Metall-Verbundrohr und der Stützhülse herzustellen. Natürlich kann die O-Ringnut so bemessen sein, dass der O-Ring in Radialrichtung auch übersteht, wobei dann jedoch eine Kalibrierung des Endes des aufzuschiebenden Rohres erfolgen muss, was einen zusätzlichen komplizierteren Arbeitsschritt sowie ein passendes Werkzeug mit einem Kalibrierdorn erfordert.

Mit der erfindungsgemäßen Ausbildung ist es möglich, die Abmessungen der Pressverbindung kleiner und damit materialeinsparend auszubilden, so dass erhebliche Kostenersparnisse ermöglicht werden können.

Bevorzugt ist die Pressverbindung mit Merkmalen gemäß der Erfindung mit einer Stützhülse ausgebildet, die rohranschlussseitig konisch zuläuft. Hierdurch kann ohne Mühe ein auch am Ende deformiertes Metall-Verbundschichtrohr auf die Stützhülse und unter die darüber befindliche Presshülse aufgeschoben werden.

Wie oben bereits angedeutet, hat das Sägezahnprofil, das unmittelbar aus einer Flanke der O-Ringnut schräg ansteigt, eine steilere und eine weniger steile Flanke. Die weniger steile Flanke steigt dabei aus der O-Ringnut heraus an.

Bevorzugt kann die steile Flanke, die z.B. zwischen 90° und 85° zur Axialrichtung der Stützhülse geneigt ist, mit einer Flanke der O-Ringnut übereinstimmen. Das heißt, dass beispielsweise die der weniger steilen Flanke des anschließenden Sägezahnprofils gegenüberliegende Flanke der O-Ringnut mit der steilen Flanke eines der O-Ringnut vorgelagerten Sägezahnprofils übereinstimmt. Auf diese Weise kann die innere Kunststoffschicht des Metall-Verbundrohres, die durch die Verpressung der erfindungsgemäßen Pressverbindung in die 0-Ringnut nebst der daraus ansteigenden Sägezahnstruktur hineingedrängt wird, einen gegen ein Ausreißen des verpressten Metall-Verbundrohres gerichteten Widerstand bewerkstelligen.

Zur weiteren mechanischen Stabilisierung der Pressverbindung können vor und/oder hinter der O-Ringnut, in der sich der O-Ring befinden kann, weitere Sägezahnprofile vorgesehen sein. Eine Anzahl von 1 bis 3 Sägezahnprofilen vor und eine Anzahl von 2 bis 4 Sägezahnprofilen hinter der O-Ringnut in Aufschubrichtung hat sich als besonders vorteilhaft erwiesen. Hier kann eine mechanisch stabile Fixierung des Metall-Verbundrohres, das aus mindestens einer inneren Kunststoffschicht, einer diese umgebenden Metallschicht, in der Regel einer Alufolie, und einer äußeren Kunststoffschicht aufgebaut sein kann, mit der verpressten Pressverbindung bei gleichzeitiger Materialeinsparung besonders gut realisiert werden.

Vorteilhafterweise ist die Presshülse der erfindungsgemäßen Pressverbindung in Axialrichtung der Pressverbindung an ihrem der Rohranschlussseite gegenüberliegenden Ende mit einem Kunststoffring ausgebildet, der die Presshülse außenumfänglich umschließt und der über die zugeordnete Stirnseite hinweg radial nach innen mit einer Eingriffslippe versehen ist, die mit einer Rastrille in der Stützhülse in Eingriff bringbar ist. Auf diese Weise kann die Presshülse dauerhaft und auch für die Montage sicher an ihrem Bestimmungsort gehalten werden. Ferner kann die Eingriffslippe auch eine galvanische Trennung zur Verfügung stellen, so dass die Metallschicht des Metall-Verbundrohres nicht in einem elektrischen Kontakt zu dem Metallabschnitt der erfindungsgemäßen Pressverbindung gelangen kann.

Ferner ist es vorteilhaft, wenn die Stützhülse an ihrem der Rohranschlussseite gegenüberliegenden Ende mit einem Absatz ausgebildet ist, gegen den eine innere Kunststoffschicht des Metall-Verbundrohres beim Aufschieben anlaufen kann, wobei der Absatz oder Anschlag in Radialrichtung so erstreckt ist, dass der Absatz oder Anschlag von der Metallschicht eines aufgeschobenen Metall-Verbundrohres insbesondere radial beabstandet ist. Auch auf diese Weise lässt sich eine galvanische Trennung in vorteilhafter Weise zur Verfügung stellen.

Weitere Vorteile lassen sich erschließen, wenn der Außendurchmesser der Stützhülse kleiner ausgebildet ist, als der Innendurchmesser des Rohres, so dass, wenn die Pressverbindung mit dem eingeführten Rohr noch nicht verpresst ist, eine Undichtigkeit auftritt. Auf diese Weise ist es möglich, beispielsweise bei der Installation eines Rohrleitungssystems innerhalb eines Gebäudes festzustellen, wenn eine Pressverbindung nicht verpresst worden ist. Durch die Undichtigkeit wird Wasser austreten und bereits in der Rohbauphase lässt sich die Verpressung nachholen, was spätere Schäden vermeiden hilft.

Nachfolgend wird die vorliegende Erfindung näher erläutert, wobei weitere erfinderische Merkmalen sowie Vorteile der Erfindung offenbart werden. Es wird keine Ausführungsform der Erfindung gezeigt. In den Figuren zeigen:
Fig. 1 einen axialen Längsschnitt durch ein Ende einer Pressverbindung, die zum Stand der Technik gehört;
Fig. 2 eine Schnittansicht gemäß Fig. 1 mit einem darin befindlichen und verpressten Rohr; und
Fig. 3 weitere Beispiele für Oberflächenstrukturen einer Stützhülse.

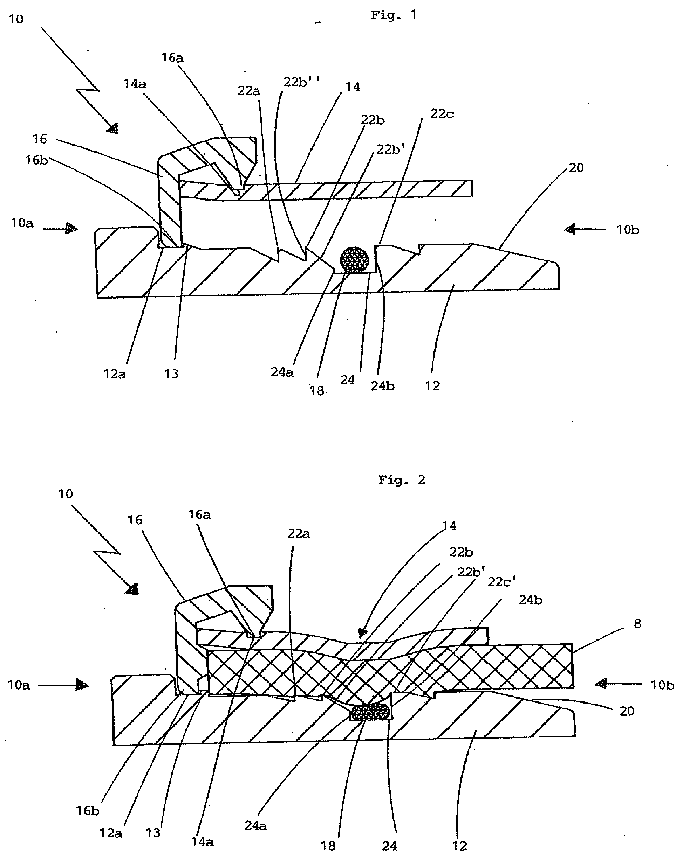

Bezüglich der Fig. 1 benannte und beschriebene Bestandteile sind mit übereinstimmenden Bezugszeichen in den nachfolgenden Figuren bezeichnet, so dass eine mehrfache Beschreibung gleicher Elemente nicht erforderlich ist.

In der Fig. 1 ist eine Pressverbindung mit dem Bezugszeichen 10 benannt worden.

Die Pressverbindung 10 weist ein aufschubseitiges Ende 10b sowie ein dem aufschubseitigen Ende gegenüberliegendes Ende 10a auf, wobei die Axialrichtung der Pressverbindung im Wesentlichen parallel zu einer generell zylindrisch ausgebildeten Stützhülse 12 und einer ebenfalls generell zylindrisch ausgebildeten Presshülse 14 verläuft.

Die Stützhülse 12 ist aufschubseitig, d.h., von der Seite 10b der Pressverbindung her, mit einer längeren Anfasung 20 bzw. Aufschubschräge 20 ausgebildet, die es ermöglicht, sowohl deformierte Rohrenden, wie auch Rohrenden, die nicht nur deformiert, sondern zudem auch nicht kalibriert sind, auf die Stützhülse 12 aufzuschieben. Die Stützhülse 12 ist mit mehreren Sägezahnstrukturen 22a ausgebildet, die sich radial erstrecken und in Umfangsrichtung der Stützhülse vollumfänglich vorgesehen sind. In der dargestellten Ausführungsform ist ein erster Sägezahn 22a vorgesehen, der unmittelbar in eine Ö-Ringnut 24 übergeht, in der ein O-Ring vorgesehen ist, der sowohl in der O-Ringnut 24 versenkt ist. Besonders bevorzugt ist es, wenn der O-Ring, beispielsweise aus Gummi oder Kunststoffmaterial, den gleichen Außendurchmesser hat, wie es der Tiefe der O-Ringnut 24 entspricht.

Als Beispiel für Abmessungen der O-Ringnut lässt sich bei einem Durchmesser des O-Ringes von etwa 1,5 mm eine Breite der O-Ringnut von 1,8 mm für eine Nennweite der Verbindung von beispielsweise 15 mm vorschlagen. Die Tiefe der O-Ringnut kann dementsprechend auch bei etwa 1,5 mm für einen O-Ring mit einem Durchmesser von ca. 1,5 mm liegen. Die O-Ringnut kann aber auch flacher ausgebildet sein, also beispielsweise 1,2 bis 1,4 mm oder tiefer, beispielsweise 1,6 bis 1,8 mm.

Der in Rohraufschubrichtung nachfolgende Sägezahn 22b geht unmittelbar aus einer ansteigenden Flanke 24a der O-Ringnut 24 hervor und die nacheilende Schräge 22b' des nacheilenden Sägezahns 22b ermöglicht die Aufnahme einer größeren Menge von Kunststoffmaterial des verpressten Rohres und eine größere Anlagefläche zwischen dem O-Ring und der verpressten inneren Kunststoffhaut des festgelegten Metall-Verbundrohres. Entsprechend vergrößerte oder verkleinerte Dimensionierungen ergeben sich für andere Nennweiten, bei denen auch andere O-Ringabmessungen zum Einsatz kommen.

Ferner ist festzuhalten, dass die vordere Flanke 24b der O-Ringnut 24 mit der steilen Flanke einer der O-Ringnut voraneilenden Sägezahnstruktur 22c zusammenfällt. Diese Sägezahnstruktur 22c ermöglicht eine besonders widerstandsfähige mechanische Festlegung des verpressten Metall-Verbundrohres.

An dem dem aufschubseitigen Ende 10b gegenüberliegenden Ende 10a der Pressverbindung 10 ist ein Absatz 13 ausgebildet, gegen den die innere Kunststoffschicht eines Metall-Verbundrohres anlaufen kann, um eine galvanische Trennung der Metallschicht des Metall-Verbundrohres und von der Pressverbindung zu ermöglichen. Ferner kann eine Rastrille 12a vorgesehen sein, in die ein Kunststoffring 16 mit einer Eingriffslippe 16b einzugreifen vermag, um eine Presshülse 14 der Pressverbindung 10 an der Stützhülse 12 festzulegen. Die Presshülse 14 kann mit einer umfänglichen Nut 14a ausgebildet sein, in die ein ebenfalls wenigstens teilumfänglich vorgesehener Grat 16a des Kuriststoffrings 16 einzugreifen vermag, um auf diese Weise die Presshülse 14 an der Pressverbindung halten zu können, ohne das Risiko einzugehen, die Presshülse zu verlieren oder dass eine Verschiebung der Presshülse während der Verpressung auftreten kann. Der Kunststoffring kann auch angespritzt werden.

In Fig. 2 ist die Pressverbindung, die sich insbesondere in Bezug auf die Rohrverbindungen für Rohre mit Nennweiten von 16 mm und 20 mm als besonders vorteilhaft erwiesen hat, mit einem darin verpressten Rohr 8 dargestellt. Deutlich ist zu erkennen, dass das Kunststoffmaterial des Rohres besonders innig in die Gesamtstruktur aus der O-Ringnut 24 und dem Sägezahn 22b mit seiner geringeren Schräge 24b' hinein verdrängt wird. Dies führt zu einer mechanisch und hydraulisch besonders vorteilhaften Pressverbindung.

Durch die sehr kurze Bauform der Pressverbindung ist es möglich, eine Presszange mit der Kontur TH-Kompakt zu verwenden. Natürlich ist es auch möglich, eine übliche Doppelkontur zu verwenden, wobei dann die zweite Verpresskontur in Aufschubrichtung am aufschubseitigen Ende 10b der Pressverbindung 10 ins Leere greift.

Die Pressung hat in Axialrichtung eine Breite von mindestens 2 mm oder mehr und kann sich vollumfänglich oder teilumfänglich erstrecken.

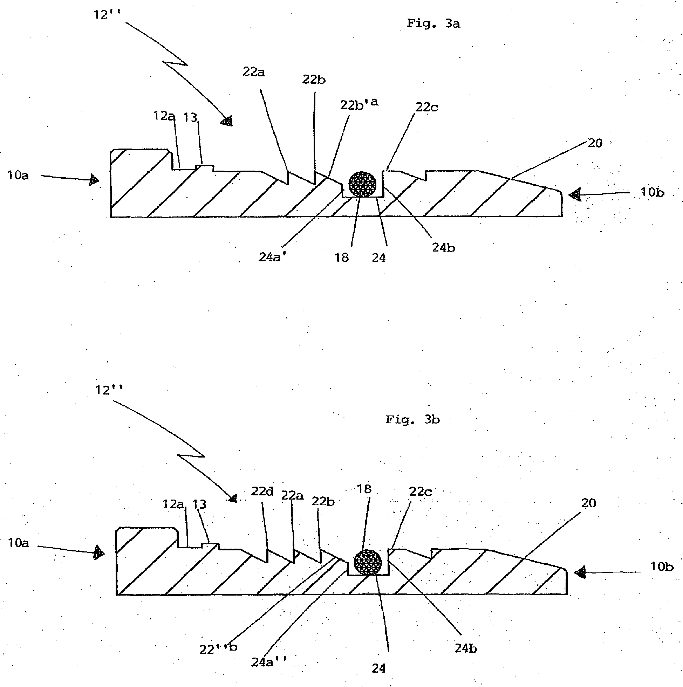

Die Figur 3 zeigt in ihren Abschnitten a und b zwei Stützhülsen 12' und 12" mit abgewandelten, Strukturen.

Bei der Stützhülse 12' ist die aus der nacheilenden senkrechten Flanke 24a' heraus schräg ansteigende Flanke 22b' der Sägezahnstruktur 22b'^{a} kürzer ausgebildet. Im Gegenzug ist die steil senkrechte bzw. rechtwinklige Flanke 24a' höher.

Hiervon unterscheidet sich die Stützhülse 12" dadurch, dass die Flanke 22b"^{b} länger und beispielsweise auch länger als die Flanken der anderen Sägezahnstrukturen 22d, 22a, 22c ausgebildet ist. Die Flanke 24a" kann folglich besonders niedrig ausgebildet sein.

Der O-Ringnut kann auch ein umfänglich und radial nicht strukturierter "zahnloser" Bereich (nicht gezeigt) vorgelagert sein. An diesen kann entgegen der Rohraufschubrichtung auch noch eine oder mehrere Sägezahnstrukturen 22c anschließen.

Die Flankenneigungen der Sägezahnstrukturen können gleich oder unterschiedlich sein und bewegen sich in den bekannten Winkelbereichen.

## Patentansprüche

1. Metall-Verbundrohrpressverbindung mit den folgenden Merkmalen:
a) einer Stützhülse (12) zum Aufschieben eines Rohres (8);
b) einer Presshülse (14) zur Pressfixierung des Rohres (8) auf der Stützhülse (12);
c) wobei die Stützhülse (12) mit einer O-Ringnut (24), einem O-Ring innerhalb der O-Ringnut und mit mindestens einem in Aufschubrichtung des Kunststoffrohres nacheilenden Sägezahnprofil (22b) versehen ist,
d) wobei die O-Ringnut (24) einzig ist und an einer ihrer radialen Flanken (24a) direkt in ein radial ansteigendes Profil (22b') des Sägezahnprofils (22b) übergeht, **dadurch gekennzeichnet, dass**
der O-Ring in Radialrichtung bündig mit dem Rand der O-Ringnut (24) oder unterhalb des Randes der O-Ringnut (24) endet.

2. Pressverbindung nach Anspruch 1, **dadurch gekennzeichnet, dass** die Stützhülse (12) rohranschlussseitig einen konischen Abschnitt (20) aufweist.

3. Pressverbindung nach einem der voranstehenden Ansprüche, **dadurch gekennzeichnet, dass** das Sägezahnprofil (22b) eine steilere und eine weniger steile Flanke (22b', 22b") hat, wobei die weniger steile Flanke (22b') aus der O-Ringnut heraus ansteigt.

4. Pressverbindung nach Anspruch 3, **dadurch gekennzeichnet, dass** eine steile Flanke einer der O-Ringnut (24) vorgelagerten Sägezahnstruktur (22c), die bevorzugt 90° bis 85° zur Axialrichtung der Stützhülse ansteigt, mit einer Flanke (24b) der O-Ringnut übereinstimmt.

5. Pressverbindung nach einem der Ansprüche 1 bis 4, **dadurch gekennzeichnet, dass** vor und hinter der O-Ringnut (24) weitere Sägezahnprofile vorgesehen sind.

6. Pressverbindung nach einem der voranstehenden Ansprüche, **dadurch gekennzeichnet, dass** die Presshülse (10) in Axialrichtung der Pressverbindung an ihrem der Rohranschlussseite gegenüberliegenden Ende (10a) mit einem Künststoffring (16) ausgebildet ist, der die Presshülse (14) außenumfänglich umschließt und der über die zugeordnete Stirnseite hinweg radial nach innen mit einer Eingriffslippe (16b) versehen ist, die mit einer Rastrille (12a) in der Stützhülse (12) in Eingriff bringbar ist.

7. Pressverbindung nach einem der voranstehenden Ansprüche, **dadurch gekennzeichnet, dass** die Stützhülse an ihrem der Rohranschlussseite gegenüberliegenden Ende (10a) mit einem Absatz (13) ausgebildet ist, gegen den eine innere Kunststoffschicht des Metallverbundrohres anläuft, wobei der Absatz in Radialrichtung so erstreckt ist, dass der Absatz (13) von der Metallschicht des aufgeschobenen Verbundrohres beabstandet ist.

8. Pressverbindung nach einem der voranstehenden Ansprüche, **dadurch gekennzeichnet, dass** der Außendurchmesser der Stützhülse etwas kleiner als der Innendurchmesser des Rohres ist, bevorzugt etwa 0,05 bis 0,15 mm kleiner, so dass, wenn die Pressverbindung mit dem eingerührten Rohr unverpresst ist, eine Undichtigkeit auftritt.

## Claims

1. A metal compound tube compression connection, comprising the following features:
a) a carrying sleeve (12) for pushing on a tube (8);
b) a compression sleeve (14) for compression fixing of said tube (8) on said carrying sleeve (12);
c) wherein said carrying sleeve (12) is provided with an annular ring groove (24), an annular ring within said annular ring groove and at least one saw tooth profile (22b) lagging in the pushing on direction of said plastic tube,
d) wherein said annular ring groove (24) is unique and directly transitions into a radially rising profile (22b') of said saw tooth profile (2b) at one of its radial flanks (24a), **characterized in that**
said annular ring terminates flush with the edge of said annular ring groove (24) or below the edge of said annular ring groove (24).

2. The compression connection according to claim 1, **characterized in that** said carrying sleeve (12) comprises a tapered portion (20) on the coupling side of said tube.

3. The compression connection according to one of the preceding claims, **characterized in that** said saw tooth profile (22b) has a steeper flank and a less steep flank (22b', 22b"), wherein said less steep flank (22b') rises out of said annular ring groove.

4. The compression connection according to claim 3, **characterized in that** a steep flank of a saw tooth structure (22c) upstream of said annular ring groove (24) which preferably rises at an angle of 90° to 85° with respect to the axial direction matches with a flank (24b) of said annular ring groove (24).

5. The compression connection according to one of the claims 1 to 4, **characterized in that** further saw tooth profiles are provided in front and in the rear of said annular ring groove (24).

6. The compression connection according to one of the preceding claims, **characterized in that** said compression sleeve (10) is formed with a plastic ring (16) at its end (10a) opposite to the coupling side of said tube in the axial direction, said plastic ring enclosing said compression sleeve (14) at its outer periphery and being provided radially inwards across the associated end face with an engaging lip (16b), adapted to be engageable with a detent slot (12a) in said carrying sleeve (12).

7. The compression connection according to one of the preceding claims, **characterized in that** said carrying sleeve is formed with a shoulder (13) at its end (10a) opposite to the coupling side of said tube against which an inner plastic layer of said metal compound tube abuts, wherein said shoulder extends in the radial direction such that said shoulder (13) is spaced apart from the metal layer of said pushed on compound tube.

8. The compression connection according to one of the preceding claims, **characterized in that** the outer diameter of said carrying sleeve is somewhat smaller than the inner diameter of said tube, preferably by about 0.05 to 0.15 mm smaller, such that a leakage occurs, if the compression connection with the inserted tube is uncompressed.

## Revendications

1. Connexion sertie de tube composite métallique comportant les caractéristiques suivantes :
a) un manchon d'appui (12) pour l'emmanchement d'un tube (8) ;
b) un manchon à sertir (14) pour la fixation par sertissage du tube (8) sur le manchon d'appui (12) ;
c) où le manchon d'appui (12) est muni d'une rainure de joint torique (24), d'un joint torique à l'intérieur de la rainure de joint torique et d'au moins un profil en dents de scie (22b) inclinées dans la direction d'emmanchement du tube en matière plastique,
d) où la rainure de joint torique (24) est unique et l'un de ses flancs radiaux (24a) débouche directement sur un profil radialement ascendant (22b') du profil en dents de scie (22b), **caractérisée en ce que**
le joint torique se termine, dans sa direction radiale, dans l'alignement du bord de la rainure de joint torique (24) ou bien sous le bord de la rainure de joint torique (24).

2. Connexion sertie selon la revendication 1, **caractérisée en ce que** le manchon d'appui (12) a un tronçon conique du côté de la connexion avec le tube.

3. Connexion sertie selon l'une quelconque des revendications précédentes, **caractérisée en ce que** le profil en dents de scie (22b) comporte un flanc plus raide et un flanc moins raide (22b', 22b"), où le flanc moins raide (22b') monte hors de la rainure de joint torique.

4. Connexion sertie selon la revendication 3, **caractérisée en ce qu'**un flanc raide d'une structure en dents de scie (22c) située en amont de la rainure de joint torique (24), formant de préférence un angle de 90° à 85° par rapport à la direction axiale du manchon d'appui, correspond à un flanc (24b) de la rainure de joint torique.

5. Connexion sertie selon l'une des revendications 1 à 4, **caractérisée en ce que** d'autres profils en dents de scie sont prévus en aval et en amont de la rainure de joint torique (24).

6. Connexion sertie selon l'une quelconque des revendications précédentes, **caractérisée en ce que** le manchon à sertir (10) est formé, dans la direction axiale de la connexion sertie, à son extrémité (10a) faisant face au côté de la connexion avec le tube, avec un anneau en matière plastique (16) qui enserre le manchon à sertir (14) à sa périphérie extérieure et qui est muni d'une lèvre d'engagement (16b) orientée radialement vers l'intérieur par-dessus le côté avant correspondant, qui est apte à s'engager dans une rainure d'encliquetage (12a) prévue dans le manchon d'appui (12).

7. Connexion sertie selon l'une quelconque des revendications précédentes, **caractérisée en ce que** le manchon d'appui est réalisé avec un épaulement (13) à son extrémité (10a) faisant face au côté de la connexion avec le tube, contre lequel une couche de matière plastique intérieure du tube composite métallique vient en appui, où l'épaulement s'étend dans la direction radiale de telle manière que l'épaulement (13) est distant de la couche de métal du tube composite emmanché.

8. Connexion sertie selon l'une quelconque des revendications précédentes, **caractérisée en ce que** le diamètre extérieur du manchon d'appui est un petit peu plus petit que le diamètre intérieur du tube, de préférence plus petit d'environ 0,05 à 0,15 mm, de sorte que lorsque la connexion sertie avec le tube emmanché n'est pas sertie, il y a un défaut d'étanchéité.
